# EUROPEAN PATENT SPECIFICATION

(11) **EP 1 951 636 B1**
(45) Date of publication and mention of the grant of the patent: **16.10.2013**
(21) Application number: 06794989.1
(22) Date of filing: 17.10.2006
(51) Int. Cl.: C04B 28/14, C04B 40/00, C04B 103/10

(54) **CEMENTITIOUS BOARD MANUFACTURE**
HERSTELLUNG VON ZEMENTARTIGEN PLATTEN
FABRICATION DE PLAQUE DE CIMENT

(30) Priority: 19.10.2005 GB 0521238
(43) Date of publication of application: 06.08.2008
(73) Proprietor: BPB Limited, Binley Business Park Coventry CV3 2TT (GB)
(72) Inventor: O'KEEFE, Sam, Loughborough Leicestershire LE12 6JS (GB); SAHAY, Parnika, Loughborough Leicestershire LE12 6JS (GB)
(74) Representative: Chapman, Helga Claire
(86) International application number: PCT/GB2006/050332
(87) International publication number: WO 2007/045923

(56) References cited:
- WO-A1-00/24670
- WO-A1-2004/035505
- DE-A1- 2 318 439
- DE-U1-202005 003 141
- FR-A- 1 162 155
- US-A- 5 932 019
- DATABASE WPI Week 197831, Derwent Publications Ltd., London, GB; AN 1978-56382A, XP002432502 & SU 571 748 A1 (POLISHCHUK S A) 15 October 1977
- DATABASE WPI Week 198237, Derwent Publications Ltd., London, GB; AN 1982-78456E, XP002432503 & SU 881 084 A1 (UKR GIPROGRAZHDANPR) 15 November 1981

## Description

This invention relates to the manufacture of cementitious board in which a slurry of cementitious material, commonly gypsum plaster, is deposited between two facing lining sheets and formed to a desired width and thickness prior to setting and drying. The process is normally carried out continuously and at high linear speed.

To manufacture gypsum board an aqueous slurry of calcined gypsum (calcium sulphate hemihydrate) is continuously spread between upper and lower paper sheets. The product formed is then continuously conveyed on a moving belt until the slurry has set. The strip or sheet is then dried until the excess water in the gypsum board has evaporated. In the production of gypsum wallboard it is known to add various substances to the slurry to enhance the production process or the board itself. For example it is usual to lighten the weight of the slurry by incorporating foaming agents to provide a degree of aeration which lowers the density of the final wallboard.

It is also known to decrease the setting time of the calcined gypsum slurry by incorporating gypsum set accelerators. Freshly ground gypsum (also known as a gypsum set accelerator) has a relatively short shelf life. The loss of acceleration efficiency of conventional accelerator materials is also exacerbated when the accelerator is exposed to heat and/or moisture.

WO 2004/035505 discloses a method of manufacturing a multi-layered cementitious product comprising the steps of combining a cementitious material with water within a mixing container so as to form an aqueous slurry, discharging the slurry from the mixing container through an outlet onto a support, and inserting a setting accelerator into the slurry at or close to the outlet of the mixing container.

DE 2318439 discloses a method of manufacture of a gypsum product from a gypsum slurry, comprising the step of treating the gypsum slurry with ultrasound, before the slurry is poured into a mould.

To combat this loss of efficiency it is known to coat the accelerator particles with, for example, sugar or a surfactant..

Accordingly, there is a need for a gypsum set accelerator or method of accelerating the set time of the gypsum slurry which alleviates the aforementioned problems.

According to the present invention there is provided a method according to claim 1.

The ultrasonic energy may be applied for a time of less than 10 seconds.

The accelerator may be hydrated calcium sulphate.

The accelerator may be a chemical accelerator.

The chemical accelerator may be potassium sulphate (K₂S0₄).

The slurry may be formed within a mixer and deposited via a mixer outlet onto paper so as to form gypsum plasterboard, said paper being located on a conveyor.

The ultrasonic energy may be applied to the slurry when the slurry is located in the mixer outlet.

The ultrasonic energy may be applied to the slurry once it is deposited on the paper conveyor.

The ultrasonic energy may be applied using a radial shaped ultrasonic horn positioned at the exit mouth of the mixer outlet.

The ultrasonic energy may be applied directly to the slurry in the mixer.

The ultrasonic energy may be applied directly to the slurry in the mixer via probes inserted into the slurry contained within the mixer.

The ultrasonic energy may also be applied via the rotor in the mixer.

Also according to the present invention there is provided apparatus according to claim 13, or claim 14.

Advantageously the application of ultrasonic energy together with a known accelerator provided a decreased setting time and therefore a more efficient plasterboard manufacturing process. The application of ultrasonic accelerator in to the mixer has also surprisingly alleviated material build up in the mixer. This is caused by the vibration produced by the application of ultrasonic energy to the mixer. In particular the combination of the use of ultrasonic energy in combination with a known gypsum accelerator has provided surprisingly goods results with the amount of particulate or chemical accelerators needed being reduced.

Embodiments of the invention will now be described with reference to the accompanying drawings in which:
Figure 1 is a fragmentary diagrammatical view of a longitudinal section of a gypsum board manufacturing line.
Figure 2 is an example of a shape of a mixer outlet according to an embodiment of the present invention.
Figure 3 is a diagrammatic view of a mixer outlet in the shape of a radial horn according to a further embodiment of the present invention.
Figure 4 is a diagrammatical section of a mixer with ultrasonic probes
Figure 5 is a diagrammatical section of a mixer with an ultrasonic rotor according to a further embodiment of the invention

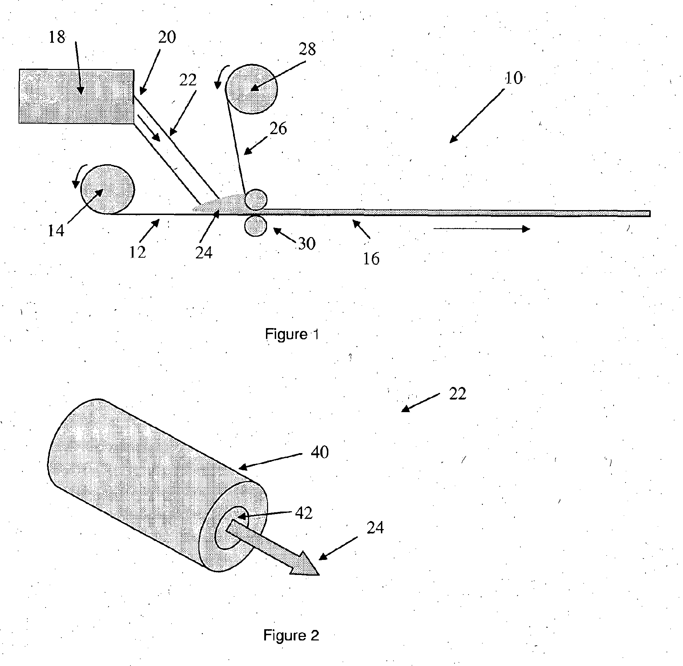

Referring to figure 1 a first layer of paper 12 is fed from a roll 14 onto a conveyor or belt 16. A storage mixer 18 contains slurry of calcium sulphate hemi hydrate and water. This storage mixer 18 is provided with an outlet 20 connected to a conduit 22. A meter is connected to said conduit 22 for measuring and controlling the amount of stucco fed through the conduit 22.

Additives are added to the storage mixer 18. Such additives may comprise retarders (e.g. proteins, organic acids), viscosity modifying agents (e.g. superplasticisers), anti-burning agents, boric acid, water-resisting chemicals (e.g. polysiloxanes, wax emulsions), glass fibres, fire-resistance enhancers (e.g. vermiculite, clays and/or fumed silica), polymeric compounds (e.g. PVA, PVOH) and other conventional additives imparted in known quantities to facilitate manufacturing such as starch.

The storage mixer 18 is provided with an outlet 20 to deliver its combined contents in the form of slurry onto the paper 12.

This slurry mixture is then delivered through an outlet pipe 22 onto the paper 12 provided on the moving belt 16.

An additive such as starch is added to the slurry stream 24 in the mixer and a further layer of paper 26 is provided over its upper surface from a roll 28. The slurry if therefore sandwiched between two sheets of paper or cardboard 12 and 26. These two sheets become the facing of the resultant gypsum board.

The thickness of the resultant board is controlled by a forming station 30 and the board is subsequently prepared by employing appropriate mechanical devices to cut or score fold and glue the overlapping edges of the paper cover sheets 12, 26. Additional guides maintain board thickness and width as the setting slurry travels on the moving conveyor belt. The board panels are cut and delivered to dryers to dry the plasterboard.

In the current embodiment of this invention, the conduit 22 may be replaced by a ring shaped radial horn through which the slurry may be fed to the slurry stream 24 during transit through the conduit the ultrasonic energy may be delivered.

Referring to figure 2, the conduit 22 may be constructed in the form of a metallic ultrasonic radial horn with outer metallic tubing 40 and inner bore 42. The slurry 24 passes through the conduit 22 where ultrasonic energy is imparted as it forms the slurry stream on the paper 12.

Advantageously the use of ultrasonic energy applied to the gypsum slurry accelerates the setting time of the gypsum by causing accelerated crystallisation.

It is understood that when the amount of ultrasonic energy applied to the gypsum slurry exceeds the natural forces holding together the molecules, cavitation occu rs.

The implosion of the cavitation bubbles produces short lived hot spots within the slurry. The collapse of some of the bubbles within the slurry enable nucleation sites to occur thus allowing accelerated crystallisation.

This has the added advantage of making the slurry outlet nozzle a self cleaning delivery unit due the vibration produced by the ultrasonic energy. The vibrations at the mixer outlet also allow the slurry to be spread evenly across the moving conveyor.

In one embodiment of this invention, the conduit 22 may be replaced by a wide mouthed tubular ultrasonic horn through which the slurry may be fed to the slurry stream 24 and during transit through the conduit the ultrasonic energy may be delivered.

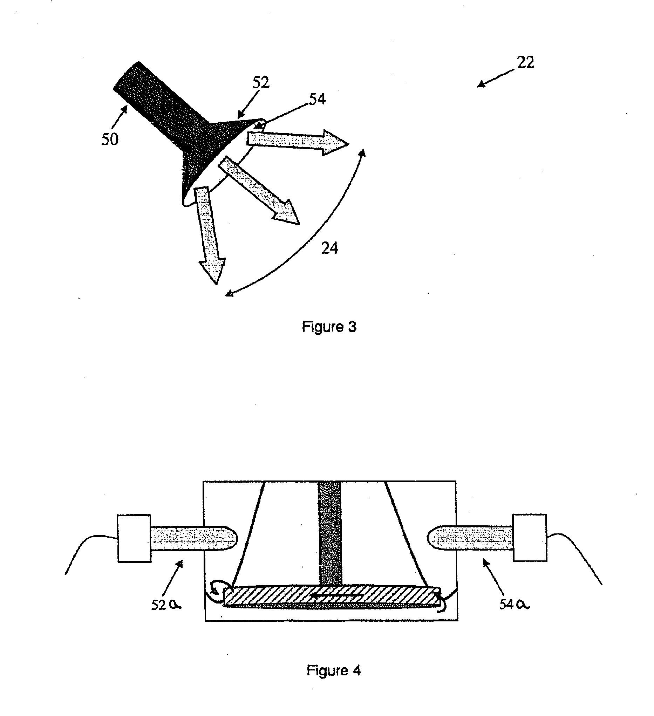

Referring to figure 3, the conduit 22 may be constructed in the form of a metallic ultrasonic radial horn with tubular outer metallic tubing 50 connected by some means to a conical section 52 thereby forming a wide mouthed slurry output bore 54. The slurry 24 passes through the conduit 22 where ultrasonic energy is imparted as it forms the slurry stream on the paper 12. Also advantageously by using a wide mouthed design of ultrasonic horn as the mixer outlet the slurry stream on the paper 12 may be more uniformly distributed and less reliant on the use of additional mechanical vibration apparatus.

Referring now to figure 4 a pair of ultrasonic probes 52a, 54a could alternatively be inserted into the mixer chamber 18 itself. The probes 52a and 54a advantageously act as a method for preventing mixer blockage by providing vibration to the slurry mixture.

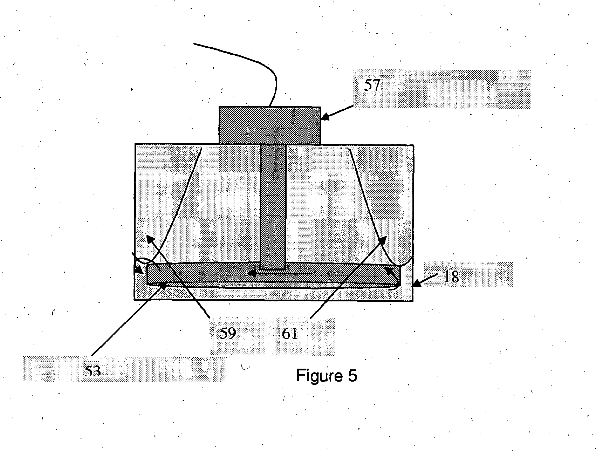

Referring to figure 5 the rotor 53 of the mixer is itself provided with ultrasonic energy via a generator 57. The rotor is essentially a conventional rotor but additionally provided with ultrasonic energy which it can impart to the gypsum slurry mixture fed into the mixer chamber 18.

The following example results further illustrate the present invention but should not be construed as limiting its scope.

With reference to the examples:
- The slurry was made using stucco of different water gauges including 70, 80 and 90 wt % of stucco (no additives) to obtain different viscosities.
- The different slurries with the different water gauges were insonated with an ultrasonic probe (at a fixed frequency of 20kHz) for different intervals, including 2, 3, 5, 10, 15 and 20 seconds.
- The set time for each insonation was measured using a Vicat set test.
- To determine the effect of foam on the insonation, different slurries with different addition levels of foam was tested in the same manner as explained above for the unfoamed slurries. In this case the water gauges were kept constant and the foam addition level altered.
- Both sets of examples (using unfoamed and foamed slurries) were repeated using different ultrasonic probes with different power outputs, (1 kW and 1.5 kW).
- The examples were repeated with the use of ultrasound in combination with particulate accelerator, Ground Mineral Nansa (GMN) and a chemical accelerator, potassium sulphate.

### Example 1

Prisms were made using 1000g of stucco at three different water gauges of 70, 80 and 90 wt% of stucco. Ultrasonic energy was applied to the slurry for 3, 5 and 10 seconds using an ultrasonic probe with a power output of 1 kW. A large high-speed blender was used to mix the stucco and water for a dispersion time of 5 seconds. The water used remained at a constant temperature of 40°C. No foam was added to the slurry in this case.

**Table 1**

| Insonation Time | Water Gauge | Initial Set Times | Final Set Times | Difference in Set Time | Average Density | Average Compressive Strength |
|---|---|---|---|---|---|---|
| (seconds) | (wt%) | (minutes) | (minutes) | (minutes) | (kg/m3) | (MPa) |
| 0 | 70 | 8.10 | 9.45 | | 1080 | 12.7 |
| 10 | 70 | 4.50 | 7.00 | -2.45 | 1078 | 14.6 |
| 0 | 80 | 8.00 | 9.20 | | 1004 | 10.4 |
| 3 | 80 | 6.56 | 7.57 | -2.03 | 994 | 10.9 |
| 0 | 80 | 8.35 | 10.10 | | 995 | 9.9 |
| 5 | 80 | 6.20 | 8.20 | -2.30 | 990 | 10.3 |
| 0 | 80 | 8.15 | 9.45 | | 986 | 9.6 |
| 10 | 80 | 5.50 | 7.13 | -2.32 | 969 | 10.9 |
| 0 | 90 | 8.00 | 9.50 | | 913 | 8.2 |
| 3 | 90 | 6.57 | 8.00 | -1.50 | 921 | 8.6 |
| 0 | 90 | 8.30 | 9.30 | | 959 | 8.0 |
| 5 | 90 | 6.38 | 7.40 | -2.30 | 927 | 9.5 |
| 0 | 90 | 8.30 | 10.15 | | 912 | 8.4 |
| 10 | 90 | 6.37 | 8.00 | -2.15 | 917 | 8.8 |

### Example 2

Tests were carried out to determine the effect of ultrasonic acceleration on foamed slurries. Prisms were made using 1000g of stucco with a water gauge of 90 wt% of stucco. A foam generator was used to produce the foam to be added to the stucco blend. The foam generator was set to have an airflow rate of 2.5 l/min, foam flow rate of 0.25 l/min and a foam concentration of 0.3%. To produce the slurry mix, a large blender was used on low speed for a total dispersion time of 10 seconds. The 1kW ultrasonic probe was used at insonation times of 3, 5 and 10 seconds to accelerate the set of the gypsum slurry.

The stucco and water was mixed in a large batch mixer for 3 seconds before the foam was added to the blend and mixed for a further 7 seconds to produce samples 1 and 2. In the case of samples 3 and 4, stucco was mixed with water for 3 seconds before the foam was added and mixed for a further 4 seconds.

**Result Table 2**

| Insonation Time | Initial Set Times | Final Set Times | Difference in Set Time | Average Density | Average Compressive Strength |
|---|---|---|---|---|---|
| (seconds) | (minutes) | (minutes) | (minutes) | (kg/m3) | (MPa) |
| 0 | 11.00 | 13.00 | | 828 | 5.19 |
| 3 | 9.27 | 10.20 | -3.20 | 812 | 4.20 |
| 0 | 11.45 | 13.15 | | 723 | 2.99 |
| 3 | 10.58 | 11.50 | -2.05 | 607 | 2.17 |
| 0 | 8.30 | 10.30 | | 776 | 4.62 |
| 5 | 6.15 | 7.15 | -3.15 | 755 | 2.35 |
| 0 | 10.15 | 12.00 | | 781 | 4.88 |
| 5 | 7.20 | 8.20 | -4.20 | 715 | 3.82 |
| 0 | 12.15 | 13.00 | | 735 | 3.88 |
| 10 | 8.36 | 9.30 | -4.10 | 714 | 2.65 |
| 0 | 10.15 | 12.00 | | 807 | 4.71 |
| 10 | 7.16 | 7.50 | -4.50 | 753 | 2.72 |

### Example 3

To compare the set times obtained with particulate accelerator as opposed to solely ultrasonic energy, prisms were made to test the effect of ultrasound on particulate accelerator (GMN). In this case, no foam was added and a water gauge of 90wt% of stucco with a water temperature 40ºC was used. A large high-speed blender was used to mix the stucco and the GMN with water for a 5 second dispersion time. GMN was hand mixed into dry stucco powder for 30 seconds before making the slurry in the blender.

**Result Table 3**

| | Insonation Time | %GMN | Initial Set Time | Final Set Time | Difference in Set Time | Average Density | Average Compressive Strength |
|---|---|---|---|---|---|---|---|
| | (seconds) | (wt%) | (minutes) | (minutes) | (min) | (kg/m3) | (MPa) |
| control | 0 | 0.5 | 3.00 | 3.45 | | 905.89 | 8.33 |
| | 3 | 0.5 | 2.12 | 3.00 | -0.45 | 852.52 | 4.23 |
| | 5 | 0.5 | 2.24 | 3.00 | -0.45 | 815.20 | 5.65 |
| | 10 | 0.5 | 1.50 | 2.48 | -1.37 | 829.94 | 4.66 |
| control | 0 | 0.1 | 5.30 | 6.15 | | 904.24 | 8.63 |
| | 3 | 0.1 | 4.30 | 5.30 | -1.25 | 880.61 | 8.55 |
| | 5 | 0.1 | 3.45 | 4.40 | -2.15 | 876.04 | 7.32 |
| | 10 | 0.1 | 3.50 | 4.54 | -2.01 | 892.16 | 7.37 |
| control | 0 | 0 | 8.50 | 11.00 | | 903.85 | 6.92 |
| | 10 | 0 | 4.30 | 5.20 | -6.20 | 921.21 | 11.00 |

### Example 4

Non-foamed slurry was insonated using a higher power probe that could draw 1.5kW compared with 1 kW power (that the previous probe was capable of). 1000g of stucco with a water gauge of 90wt% (water temperature of 40ºC) was again mixed in a high-speed blender for 5 seconds to produce the samples.

**Table 4**

| Insonation Time | Initial Set Time | Final Set Time | Difference in Set Times |
|---|---|---|---|
| (seconds) | (minutes) | (minutes) | (minutes) |
| 0 | | 10.30 | |
| 2 | 7.30 | 10.00 | -0.30 |
| 0 | 7.45 | 9.25 | |
| 15 | 4.30 | 6.20 | -3.05 |
| 0 | 8.00 | 9.15 | |
| 20 | 4.15 | 5.30 | -4.25 |

### Example 5

Non-foamed samples with two addition levels (0.06 and 0.1wt%) of potassium sulphate (chemical accelerator) were insonated using a higher powered probe (1.5kW) for different intervals to determine whether ultrasonic cavitation could be used in conjunction with potassium sulphate to further accelerate the set time of gypsum slurry.

**Table 5**

| Insonation Time | Potassium Sulphate | Initial Set Time | Final Set Time | Difference in Set Time | Densit y | Compressive Strength |
|---|---|---|---|---|---|---|
| (seconds ) | (wt%) | (minutes | (minutes ) | (minutes) | (kg/m³ ) | (MPa) |
| 0 | 0 | 7.56 | 10.56 | | 927.06 | 8.68 |
| 2 | 0 | 7.00 | 9.15 | -1.41 | 919.40 | 8.38 |
| 0 | 0.06 | 7.12 | 8.12 | | 914.61 | 8.31 |
| 2 | 0.06 | 4.40 | 6.59 | -1.53 | 909.86 | 8.72 |
| 0 | 0.06 | 5.47 | 7.38 | | 910.10 | 8.03 |
| 3 | 0.06 | 4.06 | 6.39 | -1.39 | 908.97 | 8.18 |
| 0 | 0.06 | 5.59 | 8.20 | | 910.81 | 8.42 |
| 10 | 0.06 | 5.25 | 6.20 | -2.00 | 916.53 | 9.08 |
| 0 | 0.1 | 6.18 | 7.56 | | 922.73 | 8.42 |
| 2 | 0.1 | 5.25 | 6.37 | -1.19 | 914.02 | 8.53 |
| 0 | 0.1 | 4.58 | 7.06 | | 917.63 | 8.22 |
| 3 | 0.1 | 4.58 | 5.50 | -1.56 | 921.49 | 8.67 |
| 0 | 0.1 | 5.57 | 7.39 | | 902.00 | 8.32 |
| 10 | 0.1 | 4.35 | 5.30 | -2.09 | 900.25 | 8.72 |

As seen in table 5, the application of ultrasound energy in combination with a chemical accelerator (potassium sulphate) produces a substantial increase in set time. This particular combination of ultrasound energy and chemical accelerator has been found to be more effective in reducing the setting time of the gypsum slurry than either method on its own.

Table 6 is a list of results obtained from 'on plant' trials using ultrasound according to the present invention to accelerate the setting of gypsum,

**Table Of Results For Plant Trials Using Ultrasound To Accelerate The Setting Of Gypsum Products**

| *Date* | Description | *Trial* | Final set | Avg final set | Difference (minutes) | *Notes* |
|---|---|---|---|---|---|---|
| 10/05/0 5 | Control | 1 | 3.20 | 3.15 | -1.10 | |
| | Control | | 3.20 | | | |
| | Control | | 3.20 | | | |
| | Control | | 3.10 | | | |
| | Control | | 3.00 | | | |
| | Control | | 3.20 | | | |
| 10/05/0 5 | Uls on line radial horn circumference only | 2 | 2.50 | 2.45 | | |
| | Uls on line radial horn | | 2.40 | | | |
| | circumference only | | | | | |
| 10/05/0 5 | Control | 2a | 3.20 | 3.30 | -0.20 | |
| | Control | | 3.40 | | | |
| | Uls on line radial horn circumference only (Natural Gypsum) | | 3.10 | 3.10 | | |
| 10/05/0 5 | Control | 4 | 3.50 | 3.42 | | |
| | Control | | 3.20 | | | |
| | Control | | 3.55 | | | |
| | Uls through centre of radial horn into skip | | 3.00 | 2.78 | -1.04 | |
| | Uls through centre of radial horn into skip | | 2.55 | | | |
| | Uls 90 degree to flow underneath into skip | | 3.15 | 3.15 | -0.27 | |
| 11/05/0 5 | Control | 5 | 3.10 | 2.87 | | |
| | Control | | 2.50 | | | |
| | Control | | 3.00 | | | |
| 11 /05/0 5 | Control | 6 | 3.50 | 3.50 | 0.28 | |
| | Uls with centre blocked same direction as flow into skip | | 4.00 | 3.78 | | NB. Too much foam present |
| | uls with centre blocked same direction as flow into skip | | 3.55 | | | NB. Too much foam present |
| | Control | 3.35 | 3.35 | 3.45 | -1.28 | |
| | Control | | 3.55 | | | |
| | uls with centre blocked same direction as flow into skip | | 3.05 | 2.58 | | Half stream sonicated |
| | uls with centre blocked same direction as flow into skip | | 2.30 | | | Full stream sonicated |
| | uls with centre blocked same direction as flow into skip | | 2.50 | | | |
| | uls with centre blocked same direction as flow into skip | | 2.45 | | | |
| 11/05/0 5 | Control | 7 | 4.30 | 4.25 | -1.37 | |
| | Control | | 4.20 | | | |
| | Uls through horn (added water) into skip | | 4.20 | ignore | | Too much water |
| | Uls through horn | | 3.25 | 3.28 | | |
| | Uls through horn into skip | | 3.20 | | | |
| | Uls through horn into skip | | 3.40 | | | |
| 11/05/0 5 | Control - Normal recipe into skip | 8 | 3.25 | 3.18 | | |
| | Control - Normal recipe into skip | | 3.10 | | | |
| | Control - Normal recipe into skip | | 3.20 | | | |
| | Control -no GMN or retarder | | 3.55 | 3.55 | -0.50 | Suspect some GMN still present |
| | Uls under the horn same direction as flow (no GMN or retarder) | | 3.10 | 3.05 | | |

| Date | Description | Trial | Final set | Avg final set | Difference (minutes) | |
|---|---|---|---|---|---|---|
| 11/05/0 5 | Uls under the horn same direction as flow into skip (no GMN or retarder) | | 3.00 | | | |
| | Control - Flushed out all GMN and no retarder | | 3.40 | 3.40 | -1.13 | |
| | Uls under the horn same direction as flow into skip (no GMN or retarder) | | 2.25 | 2.28 | | |
| | Uls under the horn same direction as flow into skip (no GMN or retarder) | | 2.30 | | | |
| | Control - no GMN but with retarder | | 3.50 | 3.50 | -0.50 | |
| | Uls under the horn same direction as flow (no GMN with retarder) | | 3.50 | 3.00 | | |
| | Uls under the horn same direction as flow into skip (no GMN but with retarder) | | 2.50 | | | |
| 11/05/0 5 | Control - No GMN or retarder | 9 | 3.40 | 3.67 | -1.11 | |
| | Control - No GMN or retarder | | 3.10 | | | |
| | Control - No GMN or retarder | | 2.45 | | | |
| | Control - No GMN or retarder | | 4.45 | | | |
| | Control - No GMN or retarder | | 4.45 | | | |
| | Control - No GMN or retarder | | 4.10 | | | |
| | Control - No GMN or retarder | | 4.15 | | | |
| | Control - No GMN or retarder | | 3.25 | | | |
| | Uls underneath the horn 90 degree to flow (no GMN or retarder) | | 3.25 | 2.96 | | |
| | Uls underneath the horn 90 degree to flow (no GMN or retarder) into skip | | 2.45 | | | |
| | Uls underneath the horn 90 | | 3.15 | | | |
| | degree to flow (no GMN or retarder) into skip | | | | | |
| | Uls underneath the horn 90 degree to flow (no GMN or retarder) into skip | | 3.00 | | | |
| 11/05/0 5 | Control - No GMN or retarder | 10 | 4.10 | 4.10 | -1.33 | |
| | Uls flat head horn (no GMN or retarder) 50% of power Amp. | | 3.25 | 3.18 | | Slurry bouncing off working face. |
| | Uls flat head horn into skip (no GMN or retarder) 50% of power Amp. | | 3.10 | | | |

**Table 7 is a summary table of results of set time, achieved during the plant trials.**

| Date | Control | Treatment | Difference in Set Time (minutes) |
|---|---|---|---|
| 10/05/05 | Normal recipe | Ultrasound on-line radial horn, circumference only. | -0.41 |
| 11/05/05 | Normal recipe | Ultrasound on-line radial horn, circumference only. | -0.18 |
| 11/05/05 | Normal recipe | Ultrasound through the centre of the radial horn. | -1.37 |
| 11/05/05 | No accelerator no retarder. | Ultrasound on-line radial horn, circumference only. | -1.18 |
| 11/05/05 | No accelerator but with retarder. | Ultrasound on-line radial horn, circumference only. | -0.50 |
| 11/05/05 | No accelerator no retarder. | Ultrasound flat head horn, 50% of power. | -1.33 |

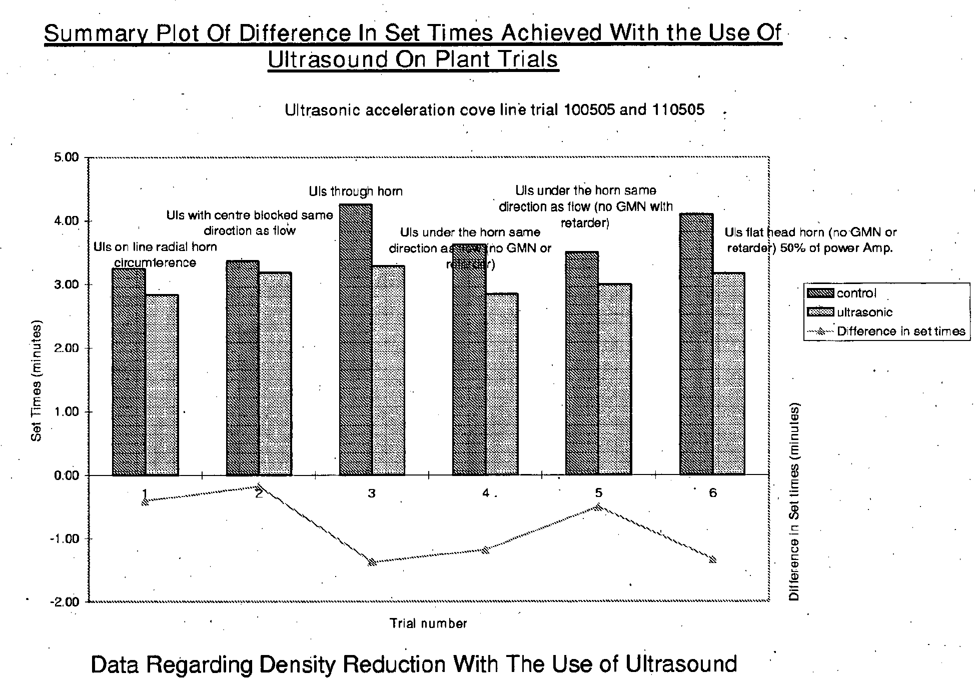

The plots below emphasise the density reduction properties of using ultrasound. Comparing all the controls with the ultrasonically treated samples shows that all of them have a lower density than the controls. The treated samples had a corresponding strength with regard to density. The ultrasound did not have a detrimental effect on strength but simply reduced the density. The treated samples present the same proportional change in strength with density as seen from the control samples.

The density reducing property of ultrasound is another beneficial effect. Ultrasound could therefore also be used to aerate the slurry, allowing a reduction in water gauge or foam usage. The reduction in water gauge is of greater economic benefit, since it would mean a reduction on the energy usage. The use of ultrasound would mean the benefit of mechanically aerating the slurry and achieving the same product densities with reduced quantity of water or foam.

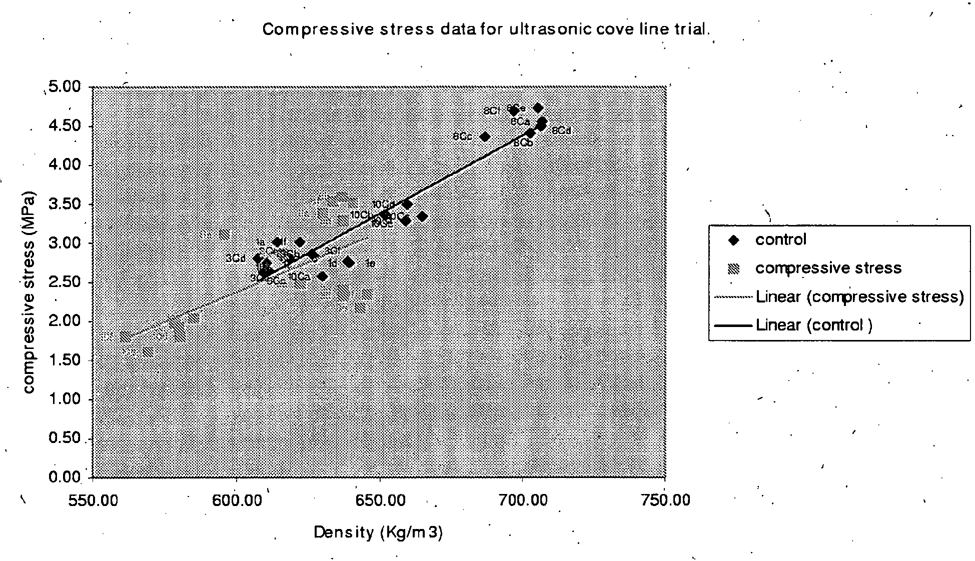

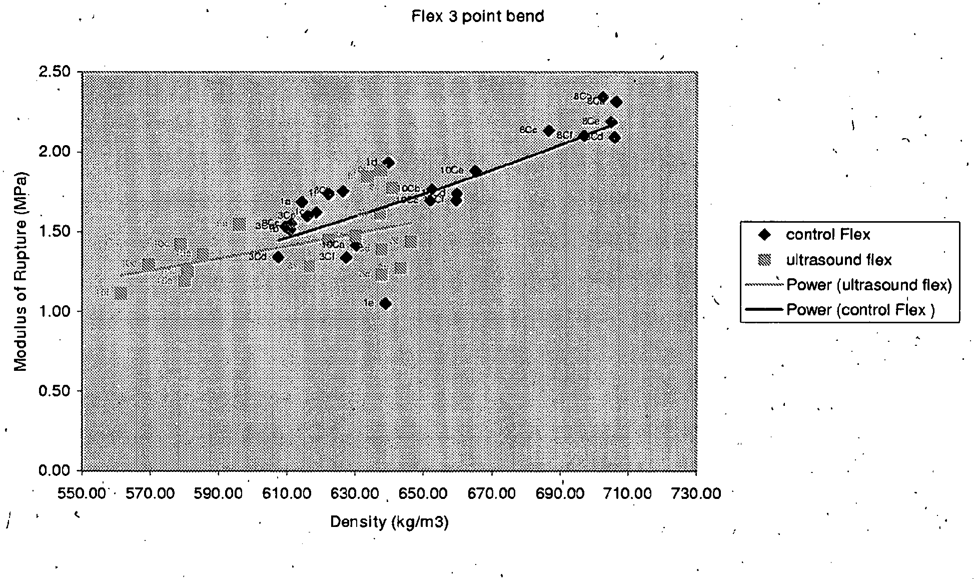

## Claims

1. A method of accelerating the setting reaction of calcium sulphate hemihydrate with water comprising the steps of:
a. mixing water and calcium sulphate hemihydrate to produce a slurry, and
b. adding an accelerator to said mixture
**characterized in that** the method further comprises the step of:
c. applying ultrasonic energy to said mixture.

2. A method of accelerating the setting reaction of calcium sulphate hemihydrate with water as claimed in claim 1 wherein the slurry is formed within a mixer (18) and deposited via a mixer outlet (20) onto paper (12) so as to form gypsum plasterboard, said paper being located on a conveyor (16).

3. A method of accelerating the setting reaction of calcium sulphate hemihydrate with water as claimed in claims 1-2 wherein the accelerator is a particulate accelerator.

4. A method of accelerating the setting reaction of calcium sulphate hemihydrate with water as claimed in claims 1-2 wherein the accelerator is a chemical accelerator.

5. A method of accelerating the setting reaction of calcium sulphate hemihydrate with water as claimed in claim 4 wherein the chemical accelerator is potassium sulphate.

6. A method of accelerating the setting reaction of calcium sulphate hemihydrate with water as claimed in any preceding claim wherein the ultrasonic energy is applied to the slurry (24) when the slurry is located in the mixer outlet (20).

7. A method of accelerating the setting reaction of calcium sulphate hemihydrate with water as claimed in claims 1-5 wherein the ultrasonic energy is applied to the slurry (24) once it is deposited on the paper conveyor.

8. A method of accelerating the setting reaction of calcium sulphate hemihydrate with water as claimed in claim 7 wherein the ultrasonic energy is applied using a radial shaped ultrasonic horn (50,52) positioned at the exit mouth of the mixer outlet (20).

9. A method of accelerating the setting reaction of calcium sulphate hemihydrate with water as claimed in claim 1 wherein the ultrasonic energy is applied directly to the slurry in the mixer (18).

10. A method of accelerating the setting reaction of calcium sulphate hemihydrate with water as claimed in claim 9 wherein the ultrasonic energy is applied directly to the slurry in the mixer via probes (52a,54a) inserted into the slurry contained within the mixer (18).

11. A method of accelerating the setting reaction of calcium sulphate hemihydrate with water as claimed in any one of the preceding claims wherein the ultrasonic energy is applied for a time of less than 10 seconds.

12. A method of accelerating the setting reaction of calcium sulphate hemihydrate with water as claimed in claim 9 wherein the ultrasonic energy is imparted to the mixer via the rotor (53).

13. An apparatus for manufacturing gypsum wall board comprising:
a mixer (18) for combining calcium sulphate hemihydrate and water
a mixer outlet (20) for depositing the gypsum slurry onto paper (12) mounted onto a conveyor (16),
**characterized in that** said mixer outlet (20) comprises a tubular shaped ultrasonic horn (40,42) for supplying ultrasonic energy to the slurry.

14. An apparatus for manufacturing gypsum wall board comprising:
a mixer (18) for combining calcium sulphate hemihydrate and water
a mixer outlet (20) for depositing the gypsum slurry onto paper (12) mounted onto a conveyor (16),
**characterised in that** said mixer (18) comprises a mixer rotor (53) that is adapted to supply ultrasonic energy to the slurry.

15. Apparatus for manufacturing gypsum wall board as claimed in claim 14 wherein the mixer rotor (53) is an ultrasonic horn.

## Patentansprüche

1. Verfahren zur Beschleunigung der Aushärtungsreaktion von Calciumsulfathalbhydrat mit Wasser, wobei das Verfahren folgende Schritte umfasst:
a. Mischen von Wasser und Calciumsulfathalbhydrat, um eine Aufschlämmung herzustellen, und
b. Zugabe eines Beschleunigers zu der Mischung,
**dadurch gekennzeichnet, dass** das Verfahren ferner folgenden Schritt umfasst:
c. Anwenden von Ultraschallenergie auf die Mischung.

2. Verfahren zur Beschleunigung der Aushärtungsreaktion von Calciumsulfathalbhydrat mit Wasser nach Anspruch 1, wobei die Aufschlämmung in einem Mischer (18) gebildet wird und über einen Mischerauslass (20) auf Papier (12) aufgetragen wird, um Gipskartonplatten zu bilden, wobei sich das Papier auf einer Förderanlage (16) befindet.

3. Verfahren zur Beschleunigung der Aushärtungsreaktion von Calciumsulfathalbhydrat mit Wasser nach Anspruch 1 bis 2, wobei der Beschleuniger ein teilchenförmiger Beschleuniger ist.

4. Verfahren zur Beschleunigung der Aushärtungsreaktion von Calciumsulfathalbhydrat mit Wasser nach Anspruch 1 bis 2, wobei der Beschleuniger ein chemischer Beschleuniger ist.

5. Verfahren zur Beschleunigung der Aushärtungsreaktion von Calciumsulfathalbhydrat mit Wasser nach Anspruch 4, wobei der chemische Beschleuniger Kaliumsulfat ist.

6. Verfahren zur Beschleunigung der Aushärtungsreaktion von Calciumsulfathalbhydrat mit Wasser nach einem der vorhergehenden Ansprüche, wobei die Ultraschallenergie auf die Aufschlämmung (24) angewendet wird, wenn sich die Aufschlämmung in dem Mischerauslass (20) befindet.

7. Verfahren zur Beschleunigung der Aushärtungsreaktion von Calciumsulfathalbhydrat mit Wasser nach Anspruch 1 bis 5, wobei die Ultraschallenergie auf die Aufschlämmung (24) angewendet wird, nachdem sie auf die Papierförderanlage aufgetragen wurde.

8. Verfahren zur Beschleunigung der Aushärtungsreaktion von Calciumsulfathalbhydrat mit Wasser nach Anspruch 7, wobei die Ultraschallenergie unter Verwendung eines radial geformten Ultraschallhoms (50, 52) angewendet wird, das an der Austrittsöffnung des Mischerauslasses (20) angeordnet ist.

9. Verfahren zur Beschleunigung der Aushärtungsreaktion von Calciumsulfathalbhydrat mit Wasser nach Anspruch 1, wobei die Ultraschallenergie direkt auf die Aufschlämmung in dem Mischer (18) angewendet wird.

10. Verfahren zur Beschleunigung der Aushärtungsreaktion von Calciumsulfathalbhydrat mit Wasser nach Anspruch 9, wobei die Ultraschallenergie direkt auf die Aufschlämmung in dem Mischer über Sonden (52a, 54a) angewendet wird, die in die Aufschlämmung eingeführt werden, die sich in dem Mischer (18) befindet.

11. Verfahren zur Beschleunigung der Aushärtungsreaktion von Calciumsulfathalbhydrat mit Wasser nach einem der vorhergehenden Ansprüche, wobei die Ultraschallenergie für eine Zeit von weniger als 10 Sekunden angewendet wird.

12. Verfahren zur Beschleunigung der Aushärtungsreaktion von Calciumsulfathalbhydrat mit Wasser nach Anspruch 9, wobei die Ultraschallenergie über den Rotor (53) auf den Mischer übertragen wird.

13. Vorrichtung zur Herstellung von Gipswandplatten, die Folgendes umfasst:
einen Mischer (18) zum Kombinieren von Calciumsulfathalbhydrat und Wasser
einen Mischerauslass (20) zum Auftragen der Gipspaste auf Papier (12), das auf einer Förderanlage (16) angeordnet ist,
**dadurch gekennzeichnet, dass** der Mischerauslass (20) ein rohrförmiges Ultraschallhorn (40, 42) zum Zuführen von Ultraschallenergie zur Aufschlämmung umfasst.

14. Vorrichtung zur Herstellung von Gipswandplatten, die Folgendes umfasst:
einen Mischer (18) zum Kombinieren von Calciumsulfathalbhydrat und Wasser
einen Mischerauslass (20) zum Auftragen der Gipspaste auf Papier (12), das auf einer Förderanlage (16) angeordnet ist,
**dadurch gekennzeichnet, dass** der Mischer (18) einen Mischrotor (53) umfasst, der dafür ausgelegt ist, der Aufschlämmung Ultraschallenergie zuzuführen.

15. Vorrichtung zum Herstellen von Gipswandplatten nach Anspruch 14, wobei der Mischrotor (53) ein Ultraschallhorn ist.

## Revendications

1. Procédé d'accélération de la réaction de prise d'un sulfate de calcium hemihydraté avec l'eau comprenant les étapes consistant à :
a. mélanger l'eau et le sulfate de calcium hemihydraté pour produire une pâte, et
b. ajouter un accélérateur audit mélange **caractérisé en ce que** le procédé comprend en outre l'étape consistant à :
c. appliquer une énergie ultrasonique audit mélange.

2. Procédé d'accélération de la réaction de prise d'un sulfate de calcium hemihydraté avec l'eau selon la revendication 1, dans lequel la pâte est formé dans un mixeur (18) et déposée par l'intermédiaire d'une sortie de mixeur (20) sur du papier (12) de manière à former une plaque de plâtre, ledit papier étant placé sur un transporteur (16).

3. Procédé d'accélération de la réaction de fixation d'un sulfate de calcium hemihydraté avec l'eau selon les revendications 1-2, dans lequel l'accélérateur est un accélérateur de particules.

4. Procédé d'accélération de la réaction de fixation d'un sulfate de calcium hemihydraté avec l'eau selon les revendications 1-2, dans lequel l'accélérateur est un accélérateur chimique.

5. Procédé d'accélération de la réaction de fixation d'un sulfate de calcium hemihydraté avec l'eau selon la revendication 4, dans lequel l'accélérateur chimique est du sulfate de potassium.

6. Procédé d'accélération de la réaction de fixation d'un sulfate de calcium hemihydraté avec l'eau selon l'une quelconque des revendications précédentes, dans lequel l'énergie ultrasonique est appliquée à la pâte (24) quand la pâte se trouve dans la sortie de mixeur (20).

7. Procédé d'accélération de la réaction de fixation d'un sulfate de calcium hemihydraté avec l'eau selon les revendications 1-5, dans lequel l'énergie ultrasonique est appliquée à la pâte (24) une fois qu'elle est déposée sur le transporteur de papier.

8. Procédé d'accélération de la réaction de fixation d'un sulfate de calcium hemihydraté avec l'eau selon la revendication 7, dans lequel l'énergie ultrasonique est appliquée en utilisant un émetteur d'ultrasons de forme radiale (50, 52) positionné à l'embouchure de sortie de la sortie de mixeur (20).

9. Procédé d'accélération de la réaction de fixation d'un sulfate de calcium hemihydraté avec l'eau selon la revendication 1, dans lequel l'énergie ultrasonique est appliquée directement à la pâte dans le mixeur (18).

10. Procédé d'accélération de la réaction de fixation d'un sulfate de calcium hemihydraté avec l'eau selon la revendication 9, dans lequel l'énergie ultrasonique est appliquée directement à la pâte dans le mixeur par l'intermédiaire de sondes (52a, 54a) insérées dans la pâte contenue dans le mixeur (18).

11. Procédé d'accélération de la réaction de fixation d'un sulfate de calcium hemihydraté avec l'eau selon l'une quelconque des revendications précédentes, dans lequel l'énergie ultrasonique est appliquée pendant moins de 10 secondes.

12. Procédé d'accélération de la réaction de prise d'un sulfate de calcium hemihydraté avec l'eau selon la revendication 1, dans lequel l'énergie ultrasonique est conférée au mixeur (18) par l'intermédiaire du rotor (53).

13. Appareil de fabrication d'un panneau de plâtre comprenant :
un mélangeur (18) pour combiner un sulfate de calcium hemihydraté et de l'eau une sortie de mixeur (20) pour déposer la pâte de plâtre sur du papier (12) monté sur un transporteur (16),
**caractérisé en ce que** ladite sortie de mixeur (20) comprend un émetteur d'ultrasons de forme tubulaire (40, 42) pour fournir une énergie ultrasonique à la pâte.

14. Appareil de fabrication d'un panneau de plâtre comprenant :
un mélangeur (18) pour combiner un sulfate de calcium hemihydraté et de l'eau
une sortie de mixeur (20) pour déposer la pâte de plâtre sur du papier (12) monté sur un transporteur (16),
**caractérisé en ce que** ladite sortie de mixeur (20) comprend un rotor de mixeur (53) qui est adapté pour fournir une énergie ultrasonique à la pâte.

15. Appareil de fabrication d'un panneau de plâtre selon la revendication 14, dans lequel le rotor de mixeur (53) est un émetteur d'ultrasons.
